# EUROPÄISCHE PATENTSCHRIFT

(11) **EP 0 503 013 B1**
(45) Veröffentlichungstag und Bekanntmachung des Hinweises auf die Patenterteilung: **12.07.1995**
(21) Anmeldenummer: 91914900.5
(22) Anmeldetag: 24.08.1991
(51) Int. Cl.: B60T 8/36, F16K 31/06

(54) **ELEKTROMAGNETVENTIL FÜR HYDRAULISCHE BREMSANLAGEN MIT SCHLUPFREGELUNG**
ELECTROMAGNETIC VALVE FOR HYDRAULIC BRAKE SYSTEMS WITH SLIP CONTROL
SOUPAPE ELECTROMAGNETIQUE POUR SYSTEMES HYDRAULIQUES DE FREINAGE A REGULATION DU GLISSEMENT

(30) Priorität: 07.09.1990 DE 4028447
(43) Veröffentlichungstag der Anmeldung: 16.09.1992
(73) Patentinhaber: ITT Automotive Europe GmbH, 60488 Frankfurt (DE); ALFRED TEVES METALLWARENFABRIK GMBH & CO. OHG, 51702 Bergneustadt (DE)
(72) Erfinder: BURGDORF, Jochen, D-6050 Offenbach-Rumpenheim (DE); VOLZ, Peter, D-6100 Darmstadt (DE); GOOSSENS, André, F., L., B-2840 Rumst (BE)
(86) Internationale Anmeldenummer: EP9101604
(87) Internationale Veröffentlichungsnummer: WO9204214

(56) Entgegenhaltungen:
- EP-A- 0 267 162
- DE-A- 3 739 915
- DE-A- 3 810 581
- US-A- 3 818 927

## Beschreibung

Die Erfindung betrifft ein Elektromagnetventil für hydraulische Bremsanlagen mit Schlupfregelung nach dem Oberbegriff des Anspruchs 1.

Bei den bisher verwendeten Elektromagnetventilen für hydraulische Bremsanlagen mit Schlupfregelung, z.B. DE-OS 37 39 915, sind spezielle, baulich von den ASR-Einlaßmagnetventilen getrennte Druckbegrenzungsventile vorgesehen, um über die schaltungstechnische Verknüpfung den Pumpendruck bei ASR-Betrieb auf einen festgelegten Maximalwert zu begrenzen. Während der Antriebsschlupfregelung werden die dem Hauptzylinder nachgeschalteten, als Trennventile ausgeführten ASR-Elektromagnetventile gesperrt, so daß beim Einsetzen der Hilfsdruckpumpen zum Zwecke der Antriebsschlupfregelung lediglich die Bremsen der angetriebenen Räder unter den von den Druckbegrenzungsventilen überwachten Systemdruck gesetzt werden, wobei ein Zurückströmen von Druckmittel über die Druckbegrenzungsventile in den Hauptzylinder nur durch das Überschreiten des zulässigen ASR-Systemdrucks ermöglicht wird.

Als nachteilig erweist sich bei diesen bekannten Bremsanlagen das Erfordernis von separat in den Hydraulikkreislauf eingefügten Druckbegrenzungsventilen, wodurch ein erheblicher Bedarf an Bauvolumen zwangsläufig zu einer kostenintensiven Bremsanlage führt.

Aus der US-A-3,818,927 ist bereits ein Elektromagnetventil mit einer Überdruckventilfunktion gemäß dem Oberbegriff des Anspruches 1 hervorgegangen, das über einen relativ zu einem Magnetanker axial beweglichen Ventilstößel verfügt, der unter Einwirkung einer Druckfeder in Richtung des Ventilsitzes belastet ist und in der Grundstellung des Elektromagnetventils von einer entgegengesetzt zur Druckfeder am Ventilstößel wirksamen Druckfeder am Magnetanker in Offenstellung gehalten ist. Überschreitet der in der Schließstellung des Ventilstößels am Ventilsitz anstehende Hydraulikdruck den entgegengesetzt gerichteten Federdruck, so öffnet der Ventilstößel durch Relativbewegung gegenüber dem Magnetanker den Ventilsitzdurchlaß. Der Ventilstößel ist im Verhältnis zu seiner Länge über einen nur kleinen und weit vom Ventilsitz entfernten Bund des Magnetankers geführt, so daß bei nicht ausreichender Führung des Ventilstößels unerwünschte Auslenk- bzw. Zentrierfehler des Ventilstößels gegenüber dem Ventilsitz zur Funktionsbeeinträchtigung führen können.

Aus der EP-A-0 267 162 ist ein Elektromagnetventil mit einer Überdruckventilfunktion hervorgegangen, dessen Ventilstößel über einen relativ langen Führungsabschnitt im Ventilgehäuse gelagert ist, wobei der Ventilstößel ein festes Bestandteil des Magnetankers bildet. Die Ventilfunktion wird im wesentlichen durch ein separat vom Ventilstößel in einem Ventilsitzkörper des Ventilgehäuses angeordnetes Ventilschließglied hergestellt. Das Ventilschließglied ist ausschließlich im Ventilsitzkörper gehalten und geführt. Die Überdruckventilfunktion geschieht abhängig von der Größe der Erregung der Spule und der zwischen dem Ventilgehäuse und dem Ventilstößel eingespannten Druckfeder, so daß mit zunehmendem Druck bzw. Abnehmen der Erregung der Spule der Ventilstößel unter Wirkung hydraulischen Verschiebekraft das Kugelsitzventil in Ventilöffnungsbewegung verschoben wird.

Die DE-A-38 10 581 befaßt sich mit der Aufnahme von Elektromagnetventilen in einem Hydraulikaggregat, wozu die Elektromagnetventile in blockförmigen Aufnahmekörpern gehalten sind. Die Elektromagnetventile sind als binär schaltbare Mehrwegeventile ausgeführt, deren Ventilstößel jeweils eine feste Verbindung mit den Magnetankern aufweisen, so daß ausschließlich durch die Erregung der Magnetspulen das bzw. die Ventilschließglieder an den Ventilstößeln entweder die eine oder die andere Schaltstellung einnehmen.

Daher liegt der Erfindung die Aufgabe zu Grunde, ein Elektromagnetventil der eingangs genannten Gattung derart weiter zu entwickeln, daß unter Umgehung der vorgenannten Nachteile bei Integration einer Druckbegrenzerfunktion ein funktionssicheres, kompaktes, insbesondere Teile minimiertes Elektromagnetventil kostensparend realisiert werden kann, wobei ein radialer Versatz und damit eine unzureichende Abstützung und Führung der Ventilnadel im Bereich des Ventilsitzes zu vermeiden ist.

Diese Aufgabe wird erfindungsgemäß durch die Merkmale des Patentanspruchs 1 gelöst.

Die Weiterbildung der Erfindung gemäß den Ansprüchen 2 und 3 sieht vor, den Magnetanker zur Aufnahme eines an der Ventilnadel sich abstützenden Federelementes mit einer abgestuften, koaxialen Öffnung zu versehen, und die Ventilnadel relativ zum Magnetanker verschiebbar zu führen. Hierdurch entsteht eine bauraumoptimierte Anordnung der funktionsrelevanten Teile innerhalb des Magnetankers, die erlaubt, den am Ventilschließglied anstehenden hydraulischen Druck unabhängig von der elektromagnetischen Stellbewegung der Ventilnadel zu steuern.

Zweckmäßigerweise ist gemäß Anspruch 4 und 5 die Ventilnadel mit einem am Absatz der Öffnung anlegbaren Anschlag versehen, wobei der Anschlag vorzugsweise angepasst an die Geometrie der Magnetankeröffnung die Form einer Anschlagscheibe besitzt, die zur seitlich abstützenden Führung des Federelementes mit einem mittig angeordneten Zapfen versehen ist.

Um das Federelement mit einer definierten Vorspannkraft auf den Anschlag der Ventilnadel einwirken zu lassen, wird in der Ausgestaltung des Erfindungsgedankens gemäß Anspruch 6 und 7 vorgeschlagen, auf der dem Anschlag gegenüberliegenden Seite in die Öffnung des Magnetankers ein axial verstellbares Druckstück einzufügen, um das Federelement auf die gewünschte Vorspannkraft einjustieren zu können.

Damit eine hinreichende hydraulische Dämpfung der im Magnetanker verschieblich geführten Ventilnadel zustande kommt, ist unter Bezugnahme auf die Weiterbildung der Erfindung gemäß Anspruch 8, das Druckstück mit einer Drosselbohrung versehen. Folglich kann der im Ventildom anstehende hydraulische Druck ergänzend zur Federvorspannkraft auf die Stirnfläche des Ventilnadelanschlags wirken, womit eine am Ventilschließglied eingeleitete hydraulische Hubkraft zwangsläufig zu einer Verdrängung des in der Öffnung des Magnetankers anstehenden Druckmittelvolumens führen muß. Die Steifigkeit der Feder, sowie die Dimensionierung der Drosselbohrung im Druckstück charakterisieren die Hubgeschwindigkeit der Ventilnadel während der Druckbegrenzungsfunktion.

Eine vorteilhafte bauliche Ausführungsform des Führungselementes ist durch die Merkmale des Anspruchs 9 charakterisiert, wonach eine ausgesprochen gute radiale Abstützung der Ventilnadel im Führungselement durch eine konvergent, sowie divergent verlaufende Körperkontur zustande kommt.

Die Ausgestaltung der Erfindung gemäß Anspruch 10 schlägt eine Anordnung eines axialbeweglich an der Ventilnadel geführten hydraulischen Stellgliedes vor. Das Stellglied liegt zunächst in einer ersten Schaltstellung mit seinem ersten Abschnitt am Führungselement an, während in der vom hydraulischen Druck bestimmten zweiten Schaltstellung des Stellgliedes, dieses die Stirnfläche des Magnetankers berührt, um den Magnetanker bei entsprechend hohem hydraulischem Druck in Ventilöffnerrichtung zu bewegen. Folglich kann der tendenziell überhöhte hydraulische Druck über die am Magnetanker befestigte, vom Ventilsitz abhebende Ventilnadel abgegeben werden.

Eine weitere Präzisierung zur gegenständlichen Ausbildung der Erfindung nach Anspruch 10 geht aus den Ansprüche 11 und 12 hervor, wonach die Grundstellung des Stellgliedes durch ein zwischen dem Ventilgehäuse und dem ersten Abschnitt wirksames Federelement definiert ist, während die zwischen dem zweiten Abschnitt und dem Magnetanker eingespannte Rückstellfeder für die Einhaltung des erforderlichen Luftspaltes zwischen dem Magnetanker und dem Stellglied sorgt.

Um auf Grund des hydraulischen Drucks eine Stellkraft auf die Ventilnadel einwirken zu lassen, wird auf das vorteilhafte Merkmal des Anspruchs 13 verwiesen, wonach der Übergangsbereich zwischen dem ersten und dem zweiten Abschnitt als druckbeaufschlagte Stirnfläche ausgebildet ist, die beim Überschreiten des zulässigen Systemdruckes die gegen den Magnetanker gerichtete Hubbewegung auslöst.

Weitere Ziele, Merkmale, Vorteile und Anwendungsmöglichkeiten der vorliegenden Erfindung ergeben sich aus der nachfolgenden Beschreibung zweier Ausführungsbeispiele anhand der Zeichnungen.

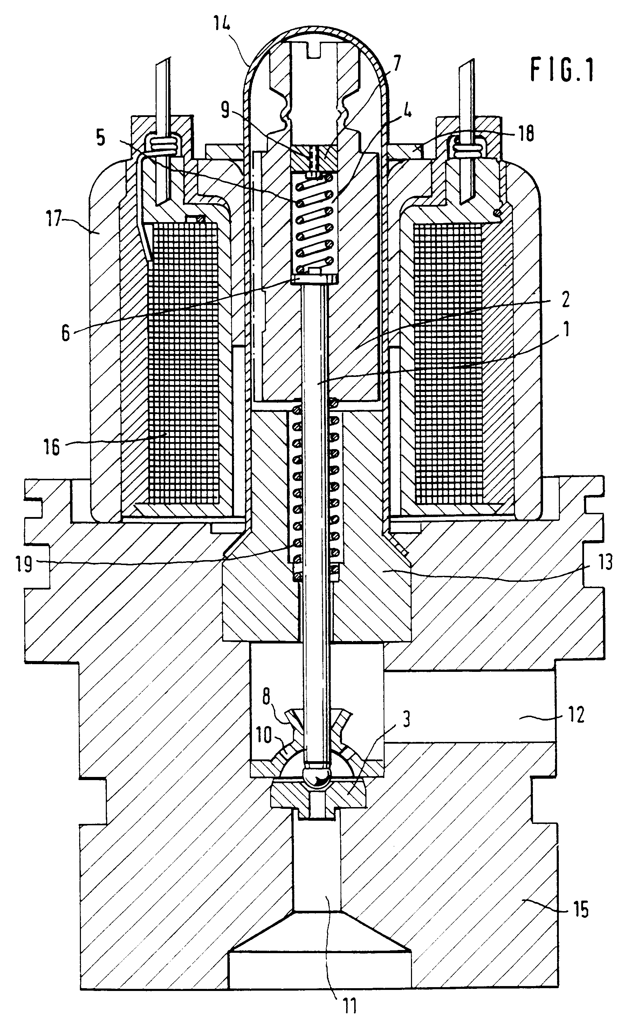

Die Figur 1 zeigt im Querschnitt ein Ausführungsbeispiel zur baulichen Gestaltung eines Elektromagnetventils mit den Merkmalen der Erfindung.

Der Magnetkern 13 ist mit dem relativ dünnwandig gepreßten Ventildom 14 im Ventilgehäuse 15 verstemmt gehalten, wobei die über dem Ventildom 14 gestülpte Magnetspule 16 mittels einem am Spulengehäuse 17 und am Ventildom 14 anliegenden Klemmring 18 befestigt ist. In der Darstellung nach Figur 1 befindet sich die Ventilnadel 1 in der elektromagnetisch nicht erregten, auf Druckmitteldurchlaß geschalteten Grundstellung, so daß über den Ringspalt zwischen dem Ventilsitz 3 und der Ventilnadel 1 eine offene Druckmittelverbindung zwischen dem ersten und zweiten Druckmittelkanal 11,12 und damit auch zu dem in der Abbildung nicht näher dargestellten Verbraucher besteht. Lediglich die zwischen dem Magnetkern 13 und dem Magnetanker 2 eingespannte Rückstellfeder 19 sorgt für das Abheben der Ventilnadel 1 vom Ventilsitz 3 in der elektromagnetisch nicht erregten Grundstellung. Ein zweites, in der koaxialen Öffnung 4 des Magnetankers 2 angeordnetes Federelement 5, hält abgestützt an einem ortsfesten Druckstück 7 die Ventilnadel 1 in der abbildungsgemäßen Grundstellung.

### Funktionsweise

Durch die bei Strombeaufschlagung der Magnetspule 16 hervorgerufenen Stellkraft schließt die Ventilnadel 1 den Ventilsitz 3, so daß die hydraulische Verbindung zwischen dem ersten und dem zweiten Druckmittelkanal 11,12 unterbrochen wird. Sobald der im ersten Druckmittelkanal 11 auf die Ventilnadel 1 einwirkende Druck die Vorspannkraft des im Magnetanker 2 voreingestellten Federelementes 5 überschreitet, vollzieht die Ventilnadel 1 in Abhängigkeit der Steifigkeit des Federelementes 5 und der durch die Drosselbohrung 9 im Druckstück 7 voreingestellten hydraulischen Dämpfung eine Hubbewegung. Unter Bezugnahme auf die bei hydraulischen Bremsanlagen mit Antriebsschlupfregelung gebräuchliche Bremsdruckregulierung der motorangetriebenen und damit antriebsschlupfgefährdeten Fahrzeugräder kann ein im ersten Druckmittelkanal 11 unzulässig hoher Systemdruck die Ventilnadel 1 öffnen, obwohl gleichzeitig das Magnetventil in der Funktion eines ASR-Trennventils elektromagnetisch die Druckmittelverbindung zum zweiten Druckmittelkanal 12 und damit auch in Richtung des in der Abbildung nicht dargestellten Hauptzylinders unterbricht. Der im ersten Druckmittelkanal 11 überhöht anstehende Bremsdruck gelangt somit ungehindert über den geöffneten Ventilsitz 3 in das die Ventilnadel 1 eng umschließende Führungselement 8, so daß über dessen radiale Druckmitteldurchlässe 10 der Bremsdruck ungehindert in Richtung des zweiten Druckmittelkanals 12 abgebaut werden kann. Die gemäß Figur 1 offenbarte bauliche Ausgestaltung des Führungselementes 8 mit konvergent, sowie divergent verlaufender Körperkontur veranschaulicht eine zweckmäßige Ausführungsform. Ebenso ist es möglich, daß als separat in der Öffnung des Ventilgehäuses 15 eingesetzte Führungselement 8 baulich mit dem im Ventilgehäuse 15 verstemmten Ventilsitz 3 zu vereinigen.

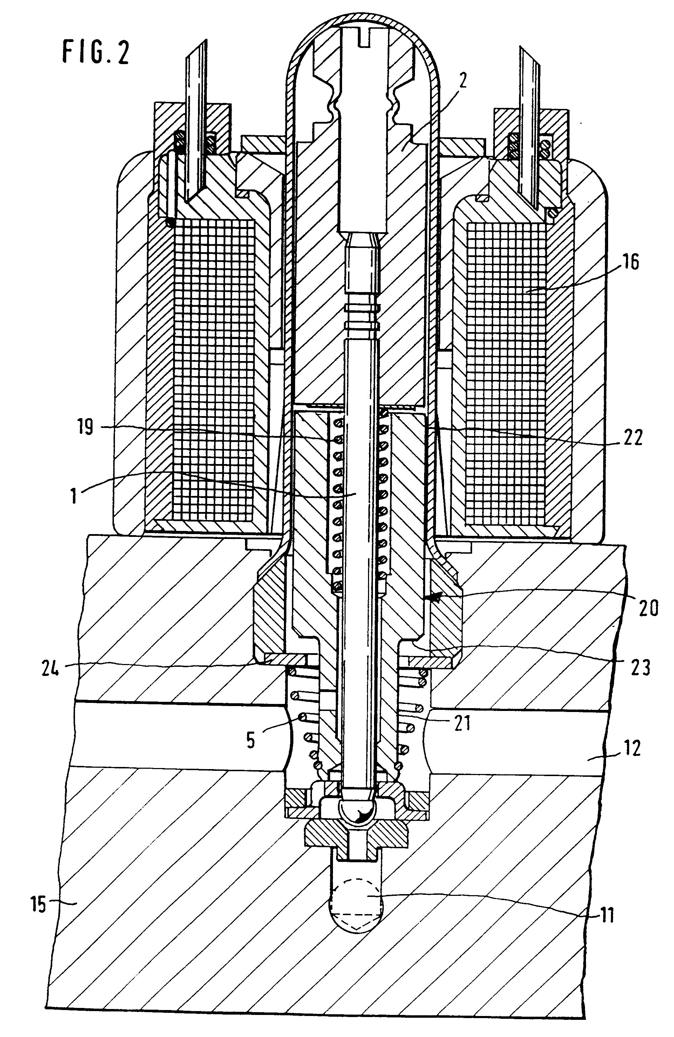

Figur 2 zeigt im Gegensatz zu den baulichen Ausführungsmerkmalen von Figur 1 eine weitere Möglichkeit zur Integration der Überdruckventilfunktion innerhalb des Elektromagnetventiles. Hierzu ist vorgesehen, durch das Einfügen eines hydraulischen Stellgliedes 20 der elektromagnetisch hervorgerufenen Stellbewegung des Magnetankers 2 entgegenzuwirken. Die hierzu zwischen dem zweiten Abschnitt 22 des Stellgliedes 20 und der Stirnfläche des Magnetankers 2 eingespannte Rückstellfeder 19 bestimmt auf bereits bekannte Weise den Luftspalt und das Schaltverhalten des Magnetankers 2. Eine zwischen dem ersten Abschnitt 21 des Stellgliedes 20 und der ventilgehäuseseitig verankerten Anschlagscheibe 24 eingespanntes Federelement 5 reguliert in Abhängigkeit der druckbeaufschlagten Ringfläche 23 den Öffnungsdruck im Sinne einer Hubbewegung der Ventilnadel 1. Als herstellungstechnisch vorteilhaft erweist sich dabei, daß die Anschlagscheibe 24 lediglich zwischen den im Ventilgehäuse 15 eingestemmten Magnetkern 13 eingelegt werden muß.

### Funktionsweise:

Die durch die elektromagnetische Erregung der Magnetspule 16 vollzogene Schließbewegung des in der Grundstellung auf ungehinderten Durchlaß geschalteten Ventilnadel 1, führt infolge der Hubbewegung des Magnetankers 2 zu einer Kontaktierung des in der Abbildung in Ruhestellung befindlichen Stellgliedes 20. Der Luftspalt zwischen dem Magnetanker 2 und dem Stellglied 20 ist folglich überbrückt, so daß in Abhängigkeit des hydraulischen Druckes im zweiten Druckmittelkanal 12 eine von der Federrate des Federelementes 5 und der Ringfläche 23 bestimmte hydraulische Stellkraft entgegengesetzt zur Magnetkraft wirksam werden kann, um die Ventilnadel 1 zur Freigabe des Ventilsitzes 3 zu bewegen.

Damit ist auf verhältnismäßig einfache Weise ein bauteiloptimiertes Elektromagnetventil mit Überdruckventilfunktion geschaffen, dessen Ventilsitz sowohl die Magnetventilfunktion wie auch die Überdruckventilfunktion uneingeschränkt übernimmt, womit eine erhebliche Reduzierung der erforderlichen Bauteile und somit des Bauraumes zur Verbilligung des funktionerweiterten Elektromagnetventils führt.

Durch die bauliche wie auch funktionelle Integration eines Überdruckventils innerhalb eines elektromagnetisch gesteuerten Zweistellungsventils ist durch die Reduzierung der ansonsten erforderlichen Bauteile ein funktionserweitertes Schaltventil verwirklicht.

Das Ausführungsbeispiel verdeutlicht den prinzipiellen Erfindungsgedanken. Andere, baulich analoge Ausführungsvarianten der Erfindung sind denkbar, ohne einen Anspruch auf detaillierte Darstellung erheben zu können. Die Erfindung ist in ihrem Wesen übertragbar auf alle elektromagnetisch zu steuernde Druckmedien, die bei kleinstem Bauaufwand einer Systemdruckregelung bedürfen.

### Bezugszeichenliste:

- 1: Ventilnadel
- 2: Magnetanker
- 3: Ventilsitz
- 4: Öffnung
- 5: Federelement
- 6: Anschlag
- 7: Druckstück
- 8: Führungselement
- 9: Drosselbohrung
- 10: Druckmitteldurchlaß
- 11: erster Druckmittelkanal
- 12: zweiter Druckmittelkanal
- 13: Magnetkern
- 14: Ventildom
- 15: Ventilgehäuse
- 16: Magnetspule
- 17: Spulengehäuse
- 18: Klemmring
- 19: Rückstellfeder
- 20: Stellglied
- 21: erster Abschnitt
- 22: zweiter Abschnitt
- 23: Ringfläche
- 24: Anschlagscheibe

## Patentansprüche

1. Elektromagnetventil für hydraulische Bremsanlagen mit Schlupfregelung, das einen von einem Ventildom (14) umschlossenen Magnetanker (2) aufweist, der in Abhängigkeit einer strombeaufschlagbaren, am Ventildom (14) angebrachten Magnetspule (16) eine Hubbewegung vollzieht, so daß eine im Magnetanker (2) angeordnete und von einem Magnetkern (13) teilumschlossene Ventilnadel (1) mit einem in einem Ventilgehäuse (15) befestigten Ventilsitz (3) zusammenwirken, kann, wobei die in Abhängigkeit von der elektromagnetischen Stellkraft vollziehbare Hubbewegung der Ventilnadel (1) durch Einwirkung einer hydraulischen Stellkraft veränderbar ist, um den zwischen einem ersten und mindestens einem zweiten Druckmittelkanal (11,12) anstehenden hydraulischen Druck zu regeln, und wobei die Ventilnadel (1) relativ zum Magnetanker (2) verschiebbar geführt ist, um den am Ventilsitz (3) anstehenden hydraulischen Druck unabhängig von der elektromagnetisch erregten Stellbewegung des Magnetankers (2) zu regeln, dadurch **gekennzeichnet**, daß im Bereich des die Ventilnadel (1) aufnehmenden Ventilsitzes (3) ein die Ventilnadel (1) aufnehmendes Führungselement (8) angeordnet ist, daß in der dem Ventilsitz (3) zugewandten Mantelfläche des Führungselementes (8) zumindest ein Druckmitteldurchlaß (10) vorgesehen ist, der in der Offenstellung der Ventilnadel (1) eine hydraulische Verbindung zwischen einem ersten und einem zweiten Druckmittelkanal (11,12) herstellt.

2. Elektromagnetventil nach Anspruch 1, dadurch **gekennzeichnet**, daß der Magnetanker (2) von einer abgestuften Öffnung (4) koaxial durchdrungen ist (Figur 1).

3. Elektromagnetventil nach Anspruch 1, dadurch **gekennzeichnet**, daß in die Öffnung (4) ein an einer Stirnfläche der Ventilnadel (1) abgestützt gehaltenes Federelement (5) eingefügt ist (Figur 1).

4. Elektromagnetventil nach Anspruch 1, dadurch **gekennzeichnet**, daß die Stirnfläche der Ventilnadel (1) mit einem am Absatz der Öffnung (4) anlegbaren Anschlag (6) versehen ist (Figur 1).

5. Elektromagnetventil nach Anspruch 4, dadurch **gekennzeichnet**, daß der Anschlag (6) aus einer flachen Anschlagscheibe gebildet ist, die zur Führung des Federelementes (5) mittig einen Zapfen aufweist (Figur 1).

6. Elektromagnetventil nach mindestens einem der vorhergehenden Ansprüche 2 bis 4, dadurch **gekennzeichnet**, daß in der Öffnung (4) des Magnetankers (2) auf der dem Anschlag (6) gegenüberliegenden Seite ein das Federelement (5) beaufschlagendes Druckstück (7) angeordnet ist (Figur 1).

7. Elektromagnetventil nach Anspruch 6, oder einem der vorhergehenden Ansprüche, dadurch **gekennzeichnet**, daß das Druckstück (7) in der Öffnung (4) des Magnetankers (2) axial verstellbar ist (Figur 1).

8. Elektromagnetventil nach Anspruch 6, dadurch **gekennzeichnet**, daß das Druckstück (7) zwecks Aufnahme einer Drosselbohrung (9) vorzugsweise als Hohlzylinder ausgebildet ist (Figur 1).

9. Elektromagnetventil nach Anspruch 1, dadurch **gekennzeichnet**, daß das Führungselement (8) eine konvergent, sowie divergent gestaltete rotationssymetrische Körperform aufweist, in dessen engsten Öffnungsquerschnitt die Ventilnadel (1) in radialer Richtung geführt ist (Figur 1).

10. Elektromagnetventil, nach Anspruch 1, dadurch **gekennzeichnet**, daß an der Ventilnadel (1) ein Stellglied (20) geführt ist, das in einer ersten Schaltstellung mit seinem ersten Abschnitt (21) am ventilsitzseitig fixierten Führungselement (8) grundpositioniert ist, während in einer zweiten Schaltstellung ein zweiter Abschnitt (22) des Stellgliedes (20) am Magnetanker (2) anlegbar ist (Figur 2).

11. Elektromagnetventil nach Anspruch 10, dadurch **gekennzeichnet**, daß der erste Abschnitt (21) aus einer die Ventilnadel (1) umgreifenden Führungshülse gebildet ist, an der ein am Ventilgehäuse (15) abgestütztes Federelement (5) gehalten ist (Figur 2).

12. Elektromagnetventil nach Anspruch 10, dadurch **gekennzeichnet**, daß der zweite Abschnitt (22) im wesentlichen aus einem hohlzylinderförmigen Anschlagteil gebildet ist, das in seiner Öffnung die dem Magnetanker (2) kontaktierende Rückstellfeder (19) aufnimmt (Figur 2).

13. Elektromagnetventil nach Anspruch 10, dadurch **gekennzeichnet**, daß zwischen dem ersten und zweiten Abschnitt (21,22) ein aus einer Ringfläche (23) gebildeter Übergangsbereich vorgesehen ist, der entgegengesetzt zur Ventilschließrichtung vom hydraulischen Druck beaufschlagbar ist (Figur 2).

## Claims

**1.** A solenoid valve for hydraulic brake units with slip control including a magnetic armature (2) which is surrounded by a valve dome (14) and performs a movement of stroke depending on a magnetic coil (16) energized by electrical current and fixed to the valve dome (14), so that a valve needle (1) which is arranged in the magnetic armature (2) and is partly surrounded by a magnetic core (13) may interact with a valve seat (3) fixed within a valve housing (15), wherein the movement of stroke of the valve needle (1) performable depending on the electromagnetic actuating force is adjustable by the effect of a hydraulic actuating force in order to control the hydraulic pressure existing between one first and at least one second pressure fluid duct (11, 12), and wherein the valve needle (1) is slidable in relation to the magnetic armature (2) in order to control the hydraulic pressure applied to the valve seat (3) irrespective of the electromagnetically energized movement of the magnetic armature (2),
**characterized** in that, in the range of the valve seat (3) accommodating the valve needle (1), a guide element (8) accommodating the valve needle (1) is positioned, in that in the peripheral surface of the guide element (8) facing the valve seat (3) at least one pressure fluid passage (10) is provided which, in the open position of the valve needle (1), establishes a hydraulic connection between a first and a second pressure fluid duct (11, 12).

**2.** A solenoid valve as claimed in claim 1,
**characterized** in that the magnetic armature (2) is formed with a coaxial stepped bore (4) (Figure 1).

**3.** A solenoid valve as claimed in claim 1,
**characterized** in that a spring element (5) is mounted in the bore (4) and engages a front face of the valve needle (1) (Figure 1).

**4.** A solenoid valve as claimed in claim 1,
**characterized** in that the front face of the valve needle (1) is provided with a stop (6) movable into abutment against the step of the bore (4) (Figure 1).

**5.** A solenoid valve as claimed in claim 4,
**characterized** in that the stop (6) is formed by a flat stop disc which is formed with a central stud for guiding the spring element (5) (Figure 1).

**6.** A solenoid valve as claimed in at least one of the preceding claims 2 to 4,
**characterized** in that a thrust member (7), acting on the spring element (5), is positioned in the bore (4) in the magnetic armature (2) on the side opposite the stop (6) (Figure 1).

**7.** A solenoid valve as claimed in claim 6 or in anyone of the preceding claims,
**characterized** in that the thrust member (7) is axially adjustable within the bore (4) in the magnetic armature (2) (Figure 1).

**8.** A solenoid valve as claimed in claim 6,
**characterized** in that, for the purpose of accommodation of a restriction bore (9), the thrust member (7) is preferably configured as a hollow cylinder (Figure 1).

**10.** A solenoid valve as claimed in claim 1,
**characterized** in that on the valve needle (1) an actuator (20) is guided which, in a first switching position, is positioned with its first section (21) on the guide element (8) fixed on the side of the valve seat, while, in a second switching position, a second section (22) of the actuator (20) is movable into abutment with the magnetic armature (2) (Figure 2).

**11.** A solenoid valve as claimed in claim 10,
**characterized** in that the first section (21) is formed by a guide bushing which surrounds the valve needle (1) and at which a spring element (5) taking support at the valve housing (15) is retained (Figure 2).

**12.** A solenoid valve as claimed in claim 10,
**characterized** in that the second section (22) is substantially formed by a hollow cylinder-shaped stop element which accommodates in its bore the return spring (19) which contacts the magnetic armature (2) (Figure 2).

**13.** A solenoid valve as claimed in claim 10,
**characterized** in that between the first and the second sections (21, 22) a range of transition formed by an annular surface (23) is provided which is subject to the hydraulic pressure in a direction opposite to the valve closing direction (Figure 2).

## Revendications

1. Valve à commande électromagnétique, pour systèmes hydrauliques de freinage à régulation du glissement, qui comprend une armature magnétique (2) qui est entourée par un dôme de valve (14) et qui exécute un mouvement de course sous l'action d'une bobine d'électro-aimant (16) agencée de façon à pouvoir être soumise à l'action d'un courant et montée sur le dôme de valve (14), d'une façon telle qu'un pointeau de valve (1), disposé dans l'armature magnétique mobile (2) et entouré en partie par un noyau magnétique (13), peut coopérer avec un siège de valve (3) fixé dans un boîtier de valve (15), tandis que le mouvement de course du pointeau de valve (1) qui peut être exécuté en fonction de la force de réglage électromagnétique peut être modifié sous l'action d'une force hydraulique de réglage, afin d'assurer une régulation de la pression hydraulique qui règne entre un premier et au moins un second conduit d'agent de pression (11, 12), et que le pointeau de valve (1) est guidé de façon à pouvoir être déplacé en translation vis-à-vis de l'armature magnétique mobile (2), afin d'assurer une régulation de la pression hydraulique présente à l'endroit du siège de valve (3) d'une manière indépendante du mouvement de réglage de l'armature magnétique mobile (2) qui est provoqué par voie électromagnétique, caractérisée en ce qu'un élément de guidage (8) recevant le pointeau de valve (1) est disposé dans la zone du siège de valve (3) recevant le pointeau de valve (1) et en ce que, dans la surface périphérique de l'élément de guidage (8) qui est tournée vers le siège de valve (3), il est prévu au moins un passage d'agent de pression (10) qui, dans la position ouverte du pointeau de valve (1), offre une communication hydraulique entre un premier et un second conduits d'agent de pression (11, 12).

2. Valve à commande électromagnétique selon la revendication 1, caractérisée en ce que l'armature magnétique mobile (2) est traversée suivant le même axe par une ouverture étagée (4) (figure 1).

3. Valve à commande électromagnétique selon la revendication 1, caractérisée en ce que, dans l'ouverture (4), il est inséré un élément à comportement élastique (5) qui est maintenu en appui sur une surface frontale du pointeau de valve (1) (figure 1).

4. Valve à commande électromagnétique selon la revendication 1, caractérisée en ce que la surface frontale du pointeau de valve (1) est pourvue d'une butée (6) agencée de façon à pouvoir être appliquée sur l'épaulement de l'ouverture (4) (figure 1).

5. Valve à commande électromagnétique selon la revendication 4, caractérisée en ce que la butée (6) est formée d'un disque de butée plat qui comporte un doigt en son centre en vue de guider l'élément à comportement élastique (5) (figure 1).

6. Valve à commande électromagnétique selon au moins l'une des revendications précédentes 2 à 4, caractérisée en ce qu'une pièce de pression (7) exerçant une action sur l'élément à comportement élastique (5) est disposée dans l'ouverture (4) de l'armature magnétique mobile (2), du côté opposé à la butée (6) (figure 1).

7. Valve à commande électromagnétique selon la revendication 6 ou l'une des revendications précédentes, caractérisée en ce que la pièce de pression (7) est agencée de façon que sa position puisse être réglée axialement dans l'ouverture (4) de l'armature magnétique mobile (2) (figure 1).

8. Valve à commande électromagnétique selon la revendication 6, caractérisée en ce que la pièce de pression (7) est réalisée, de préférence sous la forme d'un cylindre creux, en vue de recevoir un perçage d'étranglement (9).

9. Valve à commande électromagnétique selon la revendication 1, caractérisée en ce que l'élément de guidage (8) possède une forme de corps à symmétrie de révolution, à profil convergent, puis divergent, dans la section transversale d'ouverture la plus étroite de laquelle le pointeau de valve (1) est guidé en direction radiale (figure 1).

10. Valve à commande électromagnétique selon la revendication 1, caractérisée en ce qu'un organe de guidage (20) est guidé sur le pointeau de valve (1) et en ce que, dans une première position de commutation, cet organe de réglage (20) est placé dans une positione de base, par sa première section (21), sur l'élément de guidage (8) qui est fixé du côté du siège de valve, tandis que, dans une seconde position de commutation, une seconde section (22) de l'organe de réglage (20) peut être appliquée en appui sur l'armature magnétique mobile (2) (figure 2).

11. Valve à commande électromagnétique selon la revendication 10, caractérisée en ce que la première section (21) est formée d'une manchon de guidage qui entoure le pointeau de valve (1) et sur lequel est maintenu un élément à comportement élastique (5) qui prend appui sur le boîtier de valve (15) (figure 2).

12. Valve à commande électromagnétique selon la revendication 10, caractérisée en ce que la seconde section (22) est essentiellement formée d'une partie de butée de forme cylindrique creuse qui reçoit, dans son ouverture, le ressort de rappel (19) venant au conact de l'armature magnétique mobile (2) (figure 2).

13. Valve à commande électromagnétique selon la revendication 10, caractérisée en ce qu'entre la première et la seconde sections (21, 22), il est prévu une zone de transition qui est formée d'une surface annulaire (23) et qui est agencée de façon à pouvoir être soumise à l'action de la pression hydraulique dans le sens opposé au sens de fermeture de la valve (figure 2).
